# EUROPÄISCHE PATENTSCHRIFT

(11) **EP 2 792 804 B1**
(45) Veröffentlichungstag und Bekanntmachung des Hinweises auf die Patenterteilung: **13.07.2016**
(21) Anmeldenummer: 13164012.0
(22) Anmeldetag: 16.04.2013
(51) Int. Cl.: E04B 1/41, E04G 21/18, E04C 5/16, F16B 5/02, F16B 5/06, F16B 37/12, F16B 39/12, F16B 43/00, F16B 19/00, F16B 33/00

(54) **Ankervorrichtung für eine Betondecke, Betondecke und Installationsverfahren**
Anchoring device for a concrete ceiling, concrete ceiling and installation method
Dispositif d'ancrage pour une dalle en béton, dalle en béton et procédé d'installation

(43) Veröffentlichungstag der Anmeldung: 22.10.2014
(73) Patentinhaber: Zurecon AG, 8003 Zürich (CH)
(72) Erfinder: Pfluger, Gerd, 4625 Oberbuchsiten (CH)
(74) Vertreter: Rutz & Partner

(56) Entgegenhaltungen:
- US-A- 2 306 671
- US-A1- 2003 170 093

## Beschreibung

Die Erfindung betrifft eine Betondecke mit wenigstens einer Ankervorrichtung sowie ein Verfahren zur Installation der Ankervorrichtung in einer Betondecke.

In Gewerbe- Industrie- und Verwaltungsgebäuden werden Leitungen und Kabel, insbesondere Kabel für Stark- und Schwachstromnetze üblicherweise in Kabelkanälen geführt, z.B. von einem Schaltfeld einer Zentrale zu den Verbrauchern. Kabelführungsvorrichtungen dieser Art sind z.B. aus [1], Produktkatalog der LANZ OENSINGEN AG, Juni 2009, bekannt. In [1], Seiten 18 und 30, sind unterschiedliche Kabelführungsvorrichtungen gezeigt, die je nach der Art und Menge der zu verlegenden Kabel und der vorliegenden Gebäudeverhältnisse verwendet werden. Das Trägermaterial, mit dem die Kabelführungsvorrichtungen oft an einer Betondecke montiert werden, umfasst üblicherweise eine Deckenstütze, mit der ein Ausleger verbindbar ist. Auf den mit der Deckenstütze verbundenen Ausleger werden die Kabelführungsvorrichtungen abgelegt. Die Deckenstützen weisen eine Montageplatte auf, die mit der Betondecke verschraubt wird. Üblicherweise ist die Montageplatte dazu mit mehreren Öffnungen versehen, durch die hindurch Montageschrauben geführt werden. Zur Befestigung der Montageschrauben werden in der Betondecke oft Spreizanker vorgesehen, wie sie z.B. in [2], EP1903220, beschrieben sind.

Grundlagen der Fertigung von Betondecken sind in [3], Pickhardt, Roland / Bose, Thomas / Schäfer, Wolfgang: Beton - Herstellung nach Norm, Arbeitshilfe für Ausbildung, Planung und Baupraxis, 19. überarbeitete Auflage 2012, Herausgeber: Beton Marketing Deutschland GmbH, Erkrath, beschrieben. Die Betondeckung und die dafür vorgesehene Bewehrung, die üblicherweise in zwei Lagen vorgesehen wird, sind in [3], Kapitel 10, Seiten 66-71, beschrieben.

Stahlbeton ist ein Verbundwerkstoff, der aus den beiden Komponenten Beton und Bewehrungsstahl besteht. Ein Verbund beider Komponenten entsteht durch die Verklebung mit dem Bindemittel Zement und die Rippung des runden Bewehrungsstahls. Beton verfügt über eine hohe Druckfestigkeit und nur eine geringe Zugfestigkeit. Das Tragprinzip beim Baustoff Stahlbeton ist es daher, auf Zug beanspruchte Stellen eines Bauteils mit Stahl zu verstärken, also zu bewehren, und in den übrigen Bereichen die Druckfestigkeit des Betons auszunutzen (siehe: http://de.wikipedia.org/wiki/Stahlbeton).

Das Zusammenwirkung von Beton und Stahl im Stahlbetonbau ist in [4], Alfons Goris, Stahlbetonbau-Praxis nach DIN 1045 neu, 3. Auflage 2008, beschrieben. Gemäss [4] wird Beton im ungerissenen Zustand ebenfalls auf Zug belastet. Im gerissenen Zustand wird die Zuglast hingegen allein von der Bewehrung getragen.

Die Betondeckung erfüllt, nebst der Aufnahme von Druck, weitere wichtige Aufgaben. Wesentliche Faktoren sind der Schutz des Verbunds zwischen Bewehrung und Beton, der Schutz der Bewehrung gegen Rosten und die Sicherstellung einer Feuerwiderstandsdauer durch Verzögerung der Temperaturerhöhung des abgedeckten Bewehrungsstahles infolge einer Brandbeaufschlagung der Betonoberfläche. Damit alle Aufgaben erfüllt und Schäden an der Betondecke vermieden werden, ist die vorgeschriebenen Dicke der Betonabdeckung einzuhalten. Entsprechend der gewählten Dicke bzw. dem gewählten Verlegemass sind Abstandshalter einzubauen. Abstandshalter für die Bewehrung sind in [5], Frank Fingerloos, Abstandhalter nach DIN 1045 und DBV-Merkblatt, Auszug: Beton-und Stahlbetonbau, Heft 6/2006, beschrieben.

Es ist zu beachten, dass der Einbau von Spreizankern aufgrund der erforderlichen Bohrungen stets zu einer Schwächung der Betondecke führt, welche je nach Standort und der vorgesehenen Lasten kritisch sein kann. Sofern das Verlegemass der Betondecke bei der Einarbeitung der Bohrungen überschritten wird, ist es möglich, dass ein Element der Bewehrung beschädigt wird, wonach lokal eine Schwächung der Betondecke resultiert.

Spreizanker sind aufwändig ausgestaltet. Der aus [2] bekannte Spreizanker weist als Ankerelemente ein Ankerteil und eine Spreizhülse auf. Das Ankerteil weist eine erste axiale Längsbohrung, ein Lastangriffsmittel, einen ersten Abschnitt und einen zweiten Abschnitt sowie einen zwischen beiden Abschnitten liegenden, sich im Querschnitt vom ersten Abschnitt zum zweiten Abschnitt hin erweiternden Spreizabschnitt auf. Die Spreizhülse, die eine zweite axiale Längsbohrung aufweist, ist auf dem ersten Abschnitt des Ankerteils geführt und weist einen dem Spreizabschnitt zugewandten Spreizbereich auf. In der Spreizhülse sind Durchtrittsöffnungen für eine aushärtbare Masse angeordnet, die zu der zweiten axialen Längsbohrung hin offen sind. Das im Ankerteil vorgesehene Lastangriffsmittel ist ein Innengewinde, in das eine Montageschraube eingedeckt werden kann.

Spreizanker dieser Art erfordern einen erheblichen Installationsaufwand. Dazu wird die Betondecke mit einer Bohrung versehen, die zur genannten Schwächung führen kann. Kritisch ist dies insbesondere an Stellen, an denen maximale Zugspannungen auftreten, die von der Bewehrung aufzunehmen sind. Aufgrund der Schwächung der Bewehrung können in der Folge erweiterte Risse im Beton auftreten, welche einen Übergang des Betons vom ungerissenen ersten zum gerissenen zweiten Zustand und Abspaltungen zur Folge haben können. Weiterhin ist das Anbringen von Bohrungen in fertig gestellten Decken aufgrund der resultierenden Verschmutzung oft unerwünscht. Insbesondere in Labors und Reinräumen führen solche Arbeiten zu grösseren Aufwendungen, die gegebenenfalls mit Betriebsunterbrüchen verbunden sind.

Zu beachten ist ferner, dass die Tragfähigkeit der Spreizanker aufgrund der im Wesentlichen kraftschlüssigen Verbindung des Spreizankers mit dem Betonkörper begrenzt ist. Zu beachten ist ferner, dass aufgrund der Art der Bewehrung mehr oder weniger geeignete Eingriffspunkte für schwere Lasten resultieren. Im Bereich der Stossstellen der Metallstäbe der Bewehrung resultiert eine reduzierte Belastbarkeit, da die Bewehrung an diesen Stellen kaum Zugkräfte aufnehmen kann. Der Aufbau der Betondecke und die Positionen der Stossstellen werden bei der Wahl der Standorte der Spreizanker nicht beachtet, weshalb einzelne Spreizanker weniger belastbar sind, ohne dass dies der Anwender erkennt.

Anstelle von Spreizankern werden oft Ankerschienen in die Betondecke integriert, durch die wahlweise verwendbare Befestigungspunkte geschaffen werden. Dazu werden die Ankerschienen vor dem Giessvorgang z.B. Mittels Nägeln mit der Holzschalung verbunden und in die Betondecke eingegossen. Eine Ankerschiene dieser Art ist z.B. aus [6], EP2199476A2, bekannt.

Zur Aufnahme der Last weisen die Ankerschienen einen Aufnahmeraum auf, in den Anbindeteile, wie Schienenmuttern, Hintergreifteile, Nutensteine oder Hammerkopfschrauben aufgenommen werden können. Die von den Anbindeteilen eingeleitete Belastung wird über die Schienengeometrie der Ankerschiene und/oder Ankerelemente in die gegossene und ausgehärtete Betondecke übertragen.

Nachteilig bei der Verwendung von Ankerschienen ist, dass diese bereits in einem sehr frühen Stadium der Fertigung der Betondecke mit der Verschalung verbunden werden müssen. Die Montagepositionen müssen daher bereits zu einem relativ frühen Zeitpunkt festgelegt werden. Oft wünschenswerte Änderungen können zu einem späteren Zeitpunkt kaum mehr berücksichtigt werden. Nach der Montage der Ankerschienen erfolgt die Installation der Bewehrung, bei der gelegentlich unerwünschte Einwirkungen auf die montierten Ankerschienen auftreten, weshalb einzelne der Ankerschienen nach dem Giessvorgang und der Fertigstellung der Betondecke unter Umständen nicht verwendbar sind.

Die Montage der Ankerschienen auf der Verschalung, üblicherweise einer Verschalung aus Holzplatten, verursacht zudem einen erheblichen Arbeitsaufwand. Die Ankerschienen sind präzise zu montieren und an den ausgewählten Stellen durch Verbindungsmittel, insbesondere Nägel, mit der Verschalung zu verbinden. Auch nach dem Giessvorgang sind weitere Eingriffe des Handwerkers erforderlich. Nach der Entfernung der Verschalung ragen nämlich die Verbindungsmittel aus der Betondecke hervor und müssen mit entsprechendem Aufwand beseitigt werden.

Zu beachten ist, dass auch Ankerschienen nicht die maximale Last aufnehmen können, wenn sie im Bereich der Stossstellen der Bewehrung angeordnet sind.

Weiter ist zu beachten, dass Ankerschienen oft auch aus ästhetischen Gründen unerwünscht sind, weshalb stattdessen Spreizanker bevorzugt werden.

Die US2306671A offenbart eine Vorrichtung für die Planierung und Fertigung grosser Betonebenen, insbesondere Böden, Plattformen, Gehsteigen und Strassen.

Die US2003/010093 offenbart eine Betondecke mit den Merkmalen des Oberbegriffs des Anspruchs 1 und ein Verfahren mit den Merkmalen des Oberbegriffs des Anspruchs 12.

Der vorliegenden Erfindung liegt daher die Aufgabe zugrunde, eine verbesserte Betondecke mit wenigstens einer Ankervorrichtung sowie ein Verfahren zur Installation der verbesserten Ankervorrichtung in einer Betondecke anzugeben. Insbesondere soll eine kostengünstige und einfach aufgebaute Ankervorrichtung geschaffen werden, welche mit dem erfindungsgemässen Verfahren einfach, präzise und sicher installierbar ist.
Mittels der Ankervorrichtung sollen höhere Kräfte aufgenommen werden können, als mit konventionellen Spreizankern. Die Ankervorrichtung soll bei Bedarf derart montierbar sein, dass maximale Kräfte aufgenommen werden können und die Tragfähigkeit der Betondecke optimal genutzt wird.
Die Ankervorrichtung soll zudem nicht störend in Erscheinung treten, so dass sie auch in Räumen einsetzbar ist, in denen auf ein ästhetisch vorteilhaftes Erscheinungsbild geachtet wird.
Die erfindungsgemässe Betondecke soll praktisch ohne Mehraufwand realisierbar sein und dem Anwender alle nach Fertigstellung der Betondecke oder später möglicherweise benötigten Befestigungsstellen oder Ankerstellen mit optimaler Tragfähigkeit zur Verfügung stellen.
Arbeiten an der Betondecke, insbesondere beschwerliche "Über-Kopf-Arbeiten", und entsprechende Verunreinigungen des Raumes sollen vermieden werden. Vorzugsweise sollen die Arbeiten maschinell ausgeführt werden können.
Diese Aufgabe wird mit einer Betondecke und mit einem Verfahren zur Fertigung einer Betondecke mit einer solchen Ankervorrichtung gelöst, welche die in Anspruch 1 und 12 angegebenen Merkmale aufweisen. Vorteilhafte Ausgestaltungen der Erfindung sind in weiteren Ansprüchen angegeben.
Die Ankervorrichtung umfasst wenigstens eine Ankerhülse, die ein Innengewinde aufweist, das der Aufnahme einer Montageschraube dient, und die in einer Betondecke verankerbar ist, welche eine Bewehrung aufweist.

Die Ankerhülse weist einen auf eine Verschalungsplatte abstützbaren Hülsenfuss auf. Ferner ist die Ankerhülse mit einem mit der Bewehrung koppelbaren Ankerhülse mit einem mit der Bewehrung koppelbaren Verbindungsanker verbunden, der von wenigstens einer Verbindungsschraube vertikal verschiebbar gehalten ist, die im Innengewinde der Ankerhülse oder von einem Verbindungselement gehalten ist, welches mit wenigstens zwei auf die Verschalungsplatte abstützbare Ankerhülsen verbunden ist.

Vorzugsweise weist die Ankerhülse nur ein einziges durchgehendes Innengewinde auf, in das auf eine Seite die Verbindungsschraube und auf der anderen Seite die Montageschraube eingedreht werden kann. Es ist jedoch auch möglich, in der Ankerhülse zwei an die Verbindungsschraube und an die Montageschraube angepasste Innengewinde vorzusehen.

Aufgrund der doppelten Nutzung der Ankerhülse sowie der einfachen Ausgestaltungen der Ankerhülse resultiert ein einfacher und schlanker Aufbau der Ankervorrichtung. Diese kann kostengünstig gefertigt und einfach installiert werden. Die einfach ausgestalteten Ankerhülsen, die im Wesentlichen einen Stahlzylinder mit wenigstens einem Innengewinde umfassen, können in hoher Qualität kostengünstig gefertigt und in einfacher Weise mit der Ankervorrichtung verbunden werden.

Aufgrund des schlanken Aufbaus ist es auch möglich, die Ankervorrichtung an beliebigen Stellen zu positionieren und bequem zu installieren. Dazu kann der Installateur einen motorisierten Schraubendreher verwenden, mittels dessen die Verbindungsschraube hochgefahren und der Verbindungsanker mit der Bewehrung gekoppelt wird. Aufgrund des schlanken Aufbaus und des geringen Gewichts der Ankervorrichtung können diese nicht nur raumsparend gelagert und transportiert, sondern vom Installateur auch in grösster Anzahl mitgetragen werden.

Sofern die Wände des Gebäudes mit demselben Verfahren gefertigt werden, wie die Betondecken, so können die Ankervorrichtungen in gleicher Weise in Betonwände eingesetzt werden. Die Ankerhülse wird mit dem Hülsenfuss auf eine vertikal ausgerichtete Verschalungsplatte abgestützt, wonach der Verbindungsanker durch Drehen der Verbindungsschraube gegen die Bewehrung geführt und verspannt wird. Die Ankervorrichtung, die besonders vorteilhaft in Betondecken eingesetzt wird, kann daher ebenfalls vorteilhaft in Betonwänden eingesetzt werden.

Mit dem erfindungsgemässen Verfahren und der Ankervorrichtung können an der Betondecke mit geringem Aufwand alle erforderlichen Befestigungspunkte vorgesehen werden. Die Ankervorrichtungen mit den Ankerhülsen können in einer späten Fertigungsphase in die Struktur der Betondecke integriert und an ausgewählten Positionen angeordnet werden. Durch den Einbau der Ankervorrichtung wird die Betondecke nicht geschwächt, gegebenenfalls sogar verstärkt. Spätere Schwächungen der Betondecke durch die Einarbeitung von Bohrungen können vermieden werden, da alle erforderlichen Befestigungspunkte bereits zur Verfügung stehen.
Nach der Fertigstellung der Betondecke bzw. nach dem Entfernen der Verschalung stehen die integrierten Ankerhülsen für die Installation von Gegenständen zur Verfügung, ohne dass weitere Installationsarbeiten erforderlich sind. Lediglich vorzugsweise vorgesehene Dichtungselemente, wie Schrauben oder Kunststoffstöpsel, sind bedarfsweise zu entfernen, die bei der Installation der Ankervorrichtung in die Ankerhülsen eingesetzt wurden, um diese abzudichten.
Die Ankervorrichtungen bzw. die Ankerhülsen können in einem vorgesehenen Raster angeordnet werden, so dass Befestigungspunkte an alle notwendigen Positionen vorgesehen sind und leicht ermittelt werden können.
Besonders vorteilhaft werden erfindungsgemässe Betondecken in Arbeitsräumen, wie Labors, Reinräumen und Werkstätten vorgesehen. Sofern z.B. in einem Reinraum zu einem späteren Zeitpunkt ein Gegenstand an der Decke befestigt werden soll, wird lediglich die ausgewählte Ankerhülse mit einem Handgriff freigelegt, ohne dass eine Verschmutzung auftritt. Der Installationsvorgang kann ohne Einsatz von Maschinen und intrusiven Werkzeugen innerhalb weniger Minuten vollzogen werden, so dass Verschmutzungen, Betriebsunterbrüche und Störungen vermieden werden können.
Im Vergleich zu konventionellen Spreizankern können die erfindungsgemässen Ankerhülsen sehr hohe Kräfte aufnehmen, da sie formschlüssig in die gegossene Betondecke eingreifen, d.h. nicht nur kraftschlüssig mit der Betondecke verbunden sind. Die Ankerhülsen können mit beliebigen Formen sowie mit Ankerelementen und/oder Flanschen versehen werden, welche stabil innerhalb der Betondecke gehalten werden bzw. mit der Decke eine Einheit bilden. Beispielsweise werden Ankerhülsen an der Aussenseite mit einem oder mehreren Flanschringen oder mit einem Aussengewinde versehen, welches eine oder mehrere Ankermuttern aufnehmen kann. Es erfolgt somit eine gleichmässige verteilte Krafteinleitung in die Betondecke, wodurch Spannungsspitzen vermieden werden, die zu partiellen Schäden und/oder Schwächungen an der Betondecke führen könnten.
Die Ankervorrichtungen werden bedarfsweise an Positionen angeordnet, an denen aufgrund der Ausgestaltung der Bewehrung maximale Zuglasten aufgenommen werden können. Da die Ankervorrichtungen nach der Installation der Bewehrung eingesetzt werden, kann die optimale Positionierung der Ankervorrichtungen verifiziert werden, um sicherzustellen, dass maximale Lasten aufgenommen werden können. Vorzugsweise werden die Ankerhülsen in einem Raster angeordnet, welches erlaubt die Ankerhülsen bei der Fertigung der Betondecke geordnet zu setzen und nach der Fertigung einfach zu lokalisieren.

Mit dem erfindungsgemässen Verfahren und den Ankervorrichtungen kann die Tragfähigkeit der Decke daher praktisch vollständig genutzt werden. Es ist möglich, sehr schwere Lasten, wie bauliche Elemente, z.B. frei hängende Säulen an der Decke zu befestigen. Mit der neuen Befestigungstechnik werden daher neue Gestaltungsmöglichkeiten für den Architekten geschaffen.

Die Positionen der Ankervorrichtungen werden vorzugsweise anhand von Referenzpunkten vermessen und vorgegeben, so dass dem Bauherrn nach Erstellung der Betondecke ein Plan übergeben werden kann, in dem die Befestigungspunkte verzeichnet sind. Der Bauherr kann den Plan auch vor der Fertigung der Betondecke vorgeben. Der Installateur kann dem Bauherrn oder Architekten auch Raster zur Auswahl vorlegen, die unverändert übernommen oder angepasst werden.

Wie der Installation wird die Ankerhülse mit dem Hülsenfuss auf die Verschalungsplatte aufgesetzt. Durch Drehen der Verbindungsschraube wird dann der Verbindungsanker von unten gegen die Bewehrung andrückt und fixiert. Beispielsweise kann ein motorisierter Schraubendreher verwendet werden, mittels dessen die Verbindungsschraube gedreht und der Verbindungsanker innerhalb weniger Sekunden fixiert werden kann. Die Ankervorrichtungen können daher rasch und bequem gesetzt und fixiert werden.

Die Ankervorrichtung kann auch mehrere auf die Verschalungsplatte abstützbare Ankerhülsen umfassen, die von einem Verbindungselement gehalten sind. Das vorzugsweise balkenförmige Verbindungselement bzw. der Verbindungsbalken ist vorzugsweise über die Verbindungsschraube mit dem Verbindungsanker verbunden. Die Verbindungsschraube kann in einem Gewinde gehalten sein, welches im Verbindungsanker oder im Verbindungsbalken vorgesehen ist. Durch Betätigung der Verbindungsschraube wird der Verbindungsanker wiederum von unten gegen die Bewehrung geführt und daran angedrückt. Durch weiteres Drehen der Verbindungsschraube wird der vorzugsweise biegeelastische Verbindungsbalken in der Mitte nach unten gedrückt, wodurch die Ankerhülsen gegen die Verschalungsplatte gedrückt werden.

Alternativ kann der Verbindungsanker fest mit dem Verbindungsbalken verbunden oder sogar einstückig daran angeformt sein. In dieser Ausgestaltung wird der Verbindungsanker zusammen mit dem Verbindungsbalken durch Drehen der Verbindungsschrauben angehoben, die in den Ankerhülsen vorgesehen sind. Auf diese Weise ist keine dritte Verbindungsschraube erforderlich.

Alternativ kann der Verbindungsbalken auch fest mit den Ankerhülsen und über die Verbindungsschraube mit dem Verbindungsanker verbunden sein. In dieser Ausgestaltung wird nur eine Verbindungsschraube benötigt.

Sofern die Ankervorrichtung mehrere Ankerhülsen umfasst, kann der Antrieb des Verbindungsankers somit mit einer oder mehreren Verbindungsschrauben erfolgen.

Der Verbindungsanker dient einerseits dem Halten und Positionieren der Ankerhülsen vor und während des Giessvorgangs. Anschliessend sind die Ankerhülse bzw. die Ankerhülsen in der Betondecke eingegossen und fest gehalten. Die Verbindungsschraube und der Verbindungsanker, gegebenenfalls der Verbindungsbalken, sind nach dem Giessvorgang ebenfalls fest in die Betondecke integriert, weshalb sie nun auf Zug belastbar sind und die Ankerhülsen zusätzlich halten und als sogenannte Schlaudern dienen.

Nach dem Eingiessen der Ankerhülsen in die Betondecke werden diese somit durch deren Geometrie und Formgebung oder auch durch zusätzliche Ankerelemente oder Flanschelemente in der Betondecke gehalten.

Der Hülsenfuss, der die Ankerhülse senkrecht zur Verschalungsplatte ausgerichtet hält, kann unterschiedlich ausgestaltet sein. Beispielsweise können an der Unterseite der Ankerhülse nach aussen ragende Stützelemente oder Flügelelemente vorgesehen werden, die auf die Verschalungsplatte abgestützt werden. Beispielsweise besteht der Hülsenfuss aus mehreren, z.B. drei Beinen, welche die Ankerhülse stabil halten. Vorzugsweise wird ein symmetrischer Hülsenfuss zum Beispiel in der Form einer Kreisplatte verwendet, die eine zentrale Kreisöffnung aufweist, durch die die Montageschraube nach Fertigstellung der Betondecke in die Ankerhülse eindrehbar ist. Der Durchmesser des Hülsenfusses bzw. des Bereichs der durch die Kreisplatte oder die Stützelemente aufgespannt wird, liegt vorzugsweise in einem Bereich von einem Viertel bis zur Hälfte der Höhe der Ankerhülse. Vorzugsweise beträgt der Durchmesser des Hülsenfusses etwa ein Drittel der Höhe der Ankerhülse.

In vorzugsweisen Ausgestaltungen wird der Hülsenfuss mit Fixierelementen, wie Kopplungsspitzen oder Kopplungsringen, versehen, mittels denen der Hülsenfuss formschlüssig oder kraftschlüssig mit der Verschalungsplatte verbindbar ist. Durch die Fixierelemente wird bewirkt, dass der Hülsenfuss nicht verschoben und gedreht wird, wenn die Verbindungsschraube betätigt wird, um den Verbindungsanker an die Bewehrung anzukoppeln. Die Kopplungselemente können durch einen leichten Schlag auf die Ankerhülse zudem mit der Verschalungsplatte in Verbindung gebracht werden. Bei der Installation der Ankervorrichtung erfolgt daher beispielsweise zuerst ein Schlag auf den Schraubendreher, bevor dieser gedreht wird.

Der Verbindungsanker ist drehbar mit der Verbindungsschraube verbunden, so dass diese gedreht werden kann, während der Verbindungsanker nur vertikal verschoben wird. In einer vorzugsweisen Ausgestaltung weist der Schaft der Verbindungsschraube ein vorzugsweise kragenförmiges Stützelement auf, welches dem Halten des Verbindungsankers dient. Der Verbindungsanker ist auf dem Stützelement abgestützt und kann beim Drehen der Verbindungsschraube nach oben gefahren und mit der Bewehrung gekoppelt werden.

Der Verbindungsanker weist vorzugsweise einen mit dem Schaft der Verbindungsschraube verbindbaren oder daran angepassten Ankerkopf und einen an die Bewehrung ankoppelbaren Ankerfuss auf. Beispielsweise ist der Ankerkopf als Lasche oder Schlaufe ausgebildet, welche am Schaft der Verbindungsschraube eingehängt werden kann. Der Ankerkopf ist über ein Verbindungselement mit dem Ankerfuss verbunden, welcher vorzugsweise als Haken ausgebildet ist, welcher von unten gegen ein beispielsweise stabförmiges Element der Bewehrung geführt wird. Die Verbindungsschraube kann daher nach oben gedreht werden, bis der Ankerfuss mit der Bewehrung stabil gekoppelt ist und die Ankerhülse gegen die Verschalungsplatte gedrückt wird.

Der Ankerkopf wird vorzugsweise auf ein Stützelement aufgesetzt, welches am Schaft der Verbindungsschraube vorgesehen ist. Dieses Stützelement kann auf verschiedene Weisen vorteilhaft realisiert werden. Beispielsweise kann ein Schraubenschaft verwendet werden, welcher wenigstens eine Abstufung aufweist, durch die ein nach oben oder nach unten weisender Ringflansch geschaffen wird. Der nach oben weisende Ringflansch kann direkt als Stützelement verwendet werden. Der nach unten weisende Ringflansch kann als Anschlag für eine Unterlagscheibe verwendet werden, die als Stützelement dient und die mittels einer Schraubenmutter gegen den Ringflansch gedrückt wird. Das Stützelement kann auch durch eine oder zwei Schraubenmuttern realisiert werden, die am Schraubenschaft in gewählter Höhe fixiert werden. Ferner können Stützelemente, beispielsweise Unterlagscheiben, auch mit dem Schraubenschaft verschweisst werden.

Der Ankerfuss kann eines oder mehrere Ankerelemente aufweisen und daher symmetrisch oder asymmetrisch ausgestaltet sein. Die Ankerelemente werden vorzugsweise unter Berücksichtigung der Anordnung der Elemente der Bewehrung gewählt. Beispielsweise wird die Ankervorrichtung zwischen zwei Bewehrungselemente auf die Verschalungsplatte aufgesetzt, wonach der symmetrische Verbindungsanker nach oben gefahren wird, bis die beidseits daran vorgesehenen Ankerelemente korrespondierende Elemente der Bewehrung erfassen. Auf diese Weise können die Ankervorrichtungen besonders stabil installiert werden.

In vorzugsweisen Ausgestaltungen wird die Ankerhülse federelastisch zwischen der Verschalungsplatte und der Bewehrung eingespannt. Auf diese Weise werden die Ankervorrichtungen auch dann noch stabil gehalten, wenn sich die Position der Bewehrungselemente aufgrund von Relaxationen oder weiteren mechanischen Einwirkungen geändert hat. Zudem reduziert sich der Aufwand zur Montage der Ankervorrichtungen. Es muss lediglich darauf geachtet werden, dass eine erforderliche Spannung in der Ankervorrichtung erreicht wird. Dies wird am einfachsten erzielt, indem die Verbindungsschraube mit einem vorgesehenen Drehmoment z.B. im Gegenuhrzeigersinn angezogen wird.

Besonders einfach kann die Ankervorrichtung zusammengefügt werden, wenn die Verbindungsschraube einen Schraubenkopf aufweist, dessen Durchmesser geringer ist als der Durchmesser der Spiralfeder. Die Spiralfeder kann daher über den Schraubenkopf geführt und auf dem mit dem Schraubenschaft verbundenen Stützelement abgesetzt werden. Der Ankerkopf, dessen Durchmesser grösser als der Durchmesser der Spiralfeder, wird oberhalb der Spiralfeder und unterhalb des Schraubenkopfs gegen den Schraubenschaft geführt. Vor der Installation der Ankervorrichtung, wird der Verbindungsanker bzw. der Ankerkopf vom elastischen Element daher nach oben gegen den Schraubenkopf und nach der Installation nach oben gegen die Bewehrung gedrückt.

Nach dem Aufsetzen der Spiralfeder auf das Stützelement wird die Spiralfeder zusammengedrückt, so dass der Ankerkopf zwischen der Spiralfeder und dem Schraubenkopf eingefügt werden kann. Vorzugsweise weist der Ankerkopf einen Sitz oder eine Einformung auf, die der Aufnahme des Schraubenkopfes dient. Der von der Spiralfeder gegen den Kopf der Verbindungsschraube gedrückte Verbindungsanker wird somit stabil gehalten.

Zusätzlich oder anstelle eines elastischen Elements kann auch der Verbindungsanker, insbesondere der Ankerfuss oder gegebenenfalls der Verbindungsbalken, federelastisch ausgestaltet sein. Durch Anziehen der Verbindungsschraube wird daher der Ankerfuss oder der Verbindungsbalken federelastisch deformiert, wodurch wiederum eine zuverlässige Verbindung resultiert.

Der Ankerfuss kann auch mehrere übereinander liegende Ankerelemente aufweisen, von denen das jeweils passende Ankerelement mit der Bewehrung verbunden wird.
Das erfindungsgemässe Verfahren erlaubt es, Ankervorrichtungen gezielt in die Betondecke zu integrieren. Die Positionen an denen die Ankervorrichtungen zu installieren sind, werden vorzugsweise optisch angezeigt und anschliessend auf einem Datenträger registriert. Dem Bauherrn kann daher eine Liste überreicht werden, in der für jeden Raum die Positionen der Ankervorrichtungen bzw. der Ankerhülsen aufgezeichnet sind. Vorzugsweise werden Ankerhülsen in einem gleichmässigen Raster am Rand der Betondecke angeordnet. In der Folge können Deckenstützen für Kabelkanäle in einfacher Weise montiert werden. Erfindungsgemässe Betondecken erlauben es daher, beliebige Installationen mit minimalem Aufwand vorzunehmen, für die Verankerungen in der Betondecke erforderlich sind. Die in die Betondecke integriert Ankerhülsen weisen eine hohe Belastbarkeit auf und können ohne zusätzliche Arbeiten verwendet werden. Lediglich Dichtungselemente sind gegebenenfalls aus den Ankerhülsen zu entfernen.
Nachfolgend wird die Erfindung anhand von Zeichnungen näher erläutert. Dabei zeigt:
- Fig. 1: einen Schnitt durch eine mit einer Bewehrung 3 versehene Betondecke 9, die mit zwei Ankervorrichtungen 1 ausgerüstet ist, die je nur eine Ankerhülse 11 aufweisen, in die eine Verbindungsschraube 12 eingesetzt ist, mittels der ein von einem Stützelement 121 gehaltener Verbindungsanker 2 gegen die Bewehrung 3 angehoben werden kann;
- Fig. 1a: eine Verbindungsschraube 12 mit einem Schraubenschaft 129, der eine Abstufung aufweist, die einen nach oben weisenden Flanschring bildet, der anstelle der Schraubenmuttern von Figur 1 das Stützelement 121 bildet;
- Fig. 1b: eine Verbindungsschraube 12 mit einem Schraubenschaft 129, der eine Abstufung aufweist, die einen nach unten weisenden Flanschring bildet, der als Anschlag für eine Schraubenmutter oder eine Unterlagscheibe 1211 dient, die anstelle der Schraubenmuttern von Figur 1 das Stützelement 121 bilden;
- Fig. 2: einen Schnitt durch eine gegossene Betondecke 9, die mit nur einer Ankervorrichtung 1 ausgerüstet ist, die zwei Ankerhülsen 11A, 11B umfasst;
- Fig. 3: zwei vorzugsweise ausgestaltete Ankervorrichtungen 1 während der Installation, mit Verbindungsschrauben 12, deren Schaft 129 ein Stützelement 121 aufweist, auf das der Ankerkopf 22 der Ankervorrichtung 2 abgestützt wird;
- Fig. 4a: eine vorzugsweise Ausgestaltung der Verbindungsschraube 12 der Ankervorrichtung 1 von Figur 3 mit einem Stützelement 121 auf das eine Spiralfeder 25 aufgesetzt wird, die mittels des Ankerkopfs 22 unterhalb des Schraubenkopfes 129 gehalten werden kann;
- Fig. 4b: die Verbindungsschraube 12 von Figur 4a mit der auf das Stützelement 121 aufgesetzten Spiralfeder 25, die den Ankerkopf 22 gegen den Schraubenkopf 12 drückt;
- Fig. 4c: die Verbindungsschraube 12 von Figur 4b nach dem Drehen der Verbindungsschraube 12 nach oben und der dadurch komprimierten Spiralfeder 25, die den Verbindungsanker 2 gegen ein Element 32 der Bewehrung 3 andrückt;

- Fig. 5a: eine erfindungsgemässe Betondecke 9, die mit 36 gleichmässig verteilten Ankervorrichtungen 1A, 1B, 1C, ... gemäss Figur 3 ausgerüstet ist; und
- Fig. 5b: eine erfindungsgemässe Betondecke 9, die mit 24 Ankervorrichtungen 1A, 1B, 1C, ... gemäss Figur 4 ausgerüstet ist, die gleichmässig entlang dem Rand der Betondecke 9 verteilt sind.

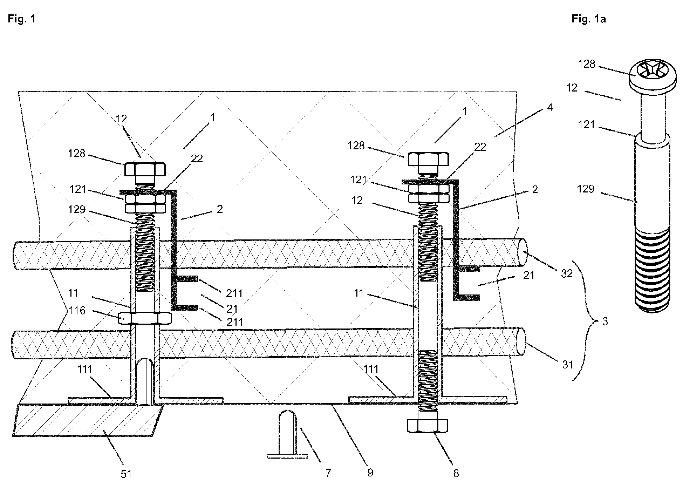

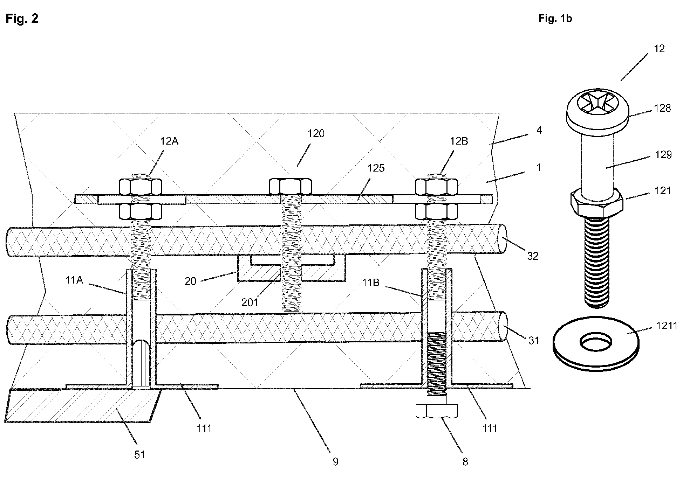

Figur 1 zeigt einen Schnitt durch eine Betondecke 9, die mit zwei erfindungsgemässen Ankervorrichtungen 1 ausgerüstet ist. Die gefertigte Betondecke 9 ist noch mit der Verschalung bzw. einer Verschalungsplatte 51 versehen, über der eine Betonmischung 4 eingefüllt wurde. Gezeigt ist ferner die Bewehrung 3, die eine obere und eine untere Stahllage 31, 32 aufweist. Exemplarisch sind zwei Längsstäbe gezeigt, die auf Zug belastet werden.

Jede Ankervorrichtung 1 umfasst eine Ankerhülse 11 auf, die einen mit einer Öffnung versehenen Hülsenfuss 111 aufweist, der auf die Verschalungsplatte 51 abgestützt ist. In die Ankerhülsen 11 ist von oben eine Verbindungsschraube 12 eingesetzt, mittels der ein Verbindungsanker 2 vertikal verschiebbar gehalten ist. Der Verbindungsanker 2 weist einen von der Verbindungsschraube 12 gehaltenen Ankerkopf 22 und einen an die Bewehrung 3; 31, 32 ankoppelbaren Ankerfuss 21 auf. Der Ankerfuss 21 weist mehrere vorzugsweise hakenförmig ausgestaltete Ankerelemente 211 auf, von denen das Nächstliegende mit einem Element 32 der Bewehrung 3 gekoppelt wird.

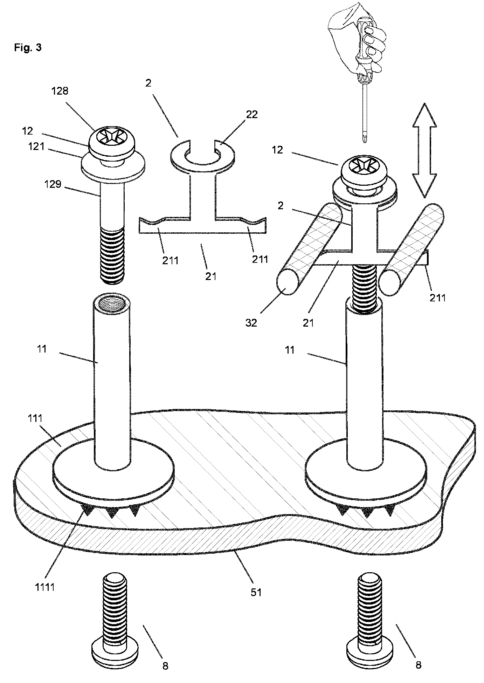

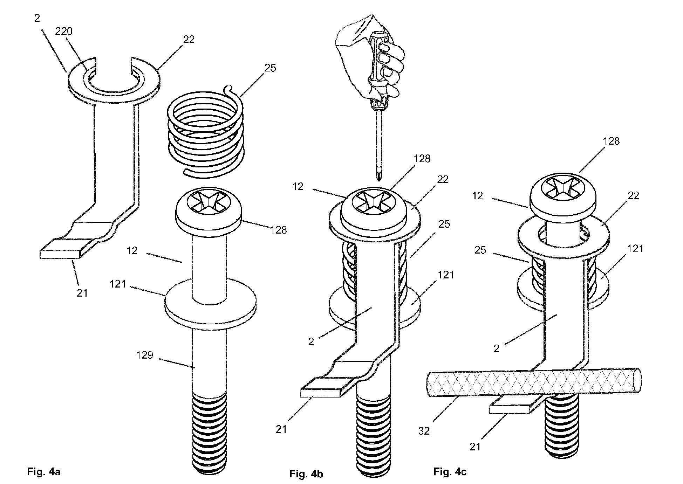

Der Ankerkopf 22 umschliesst den Schaft 129 der Verbindungsschraube 12 unterhalb des Schraubenkopfs 128 und ist auf ein Stützelement 121 abgestützt, das mit dem Schraubenschaft 129 verbunden ist. Im gezeigten Ausführungsbeispiel ist der Schraubenschaft 129 mit zwei Kontermuttern versehen, welche gegeneinander verkeilt sind, und dadurch das fest mit dem Schraubenschaft 129 verbundene Stützelement 121 bilden. Alternativ kann auch ein Stützelement 121 vorgesehen werden, welches die Form eines Tellers oder einer Unterlagscheibe aufweist wie dies in den Figuren 3 und 4 gezeigt ist. Ein Teller oder eine entsprechend dimensionierte Unterlagescheibe kann mit dem Schraubenschaft 129 verschweisst werden.

Besonders vorteilhaft kann das Stützelement 121 mit einer Verbindungsschraube 12 realisiert werden, die einen abgestuften Schraubenschaft 129 aufweist.

Figur 1a zeigt eine Verbindungsschraube 12 mit einem Schraubenschaft 129, der eine Abstufung aufweist, die einen nach oben weisenden Flanschring bildet, der anstelle der Schraubenmuttern 121 von Figur 1 als Stützelement 121 für den Verbindungsanker 2 dient. Das Stützelement 121 ist in dieser Ausgestaltung somit integraler Bestandteil des Schraubenschafts 129. Mit dieser Ausgestaltung kann der Aufwand zur Herstellung der Ankervorrichtung 1 deutlich reduziert werden. Ein Flanschelement kann auch gebildet werden, indem eine Nut in den Schraubenschaft 129 gefräst wird, in die der Ankerkopf 22 eingehängt wird.

Figur 1b zeigt eine Verbindungsschraube 12 mit einem Schraubenschaft 129, der eine Abstufung aufweist, die einen nach unten weisenden Flanschring bildet, der als Anschlag für eine Schraubenmutter dient, die das Stützelement 121 für den Verbindungsanker 2 bildet. Zwischen dem nach unten weisenden Flanschring und der Schraubenmutter kann zudem die gezeigte Unterlagscheibe 1211 eingesetzt werden, welche das Stützelement 121 bildet.

In Figur 1 ist der Verbindungsanker 2 der links gezeigten Ankervorrichtung 1 noch nicht mit der Bewehrung 3 gekoppelt. Bei der rechts gezeigten Ankervorrichtung 1 wurde die Verbindungsschraube 12 in der Ankerhülse 11 im Gegenuhrzeigersinn nach oben gedreht, wodurch der Verbindungsanker 2 nach oben angehoben und der Ankerfuss 21 mit der Bewehrung 3, bzw. mit dem oberen Bewehrungsstab 32 gekoppelt wurde. Es ist gezeigt, dass das obere Ankerelement 211 mit dem Bewehrungselement 32 gekoppelt ist.

In Figur 1 ist ferner gezeigt, dass eine der Ankerhülsen 11 ein Aussengewinde aufweist, auf das eine Ankermutter 116 aufgesetzt wurde. Die Ankermutter 116 dient nach dem Eingiessen und Verfestigen der Betonmischung 4 als zusätzliches Ankerelement, welches die Ankerhülse 11 in der Betondecke 4 sichert.

Damit während des Giessvorgangs kein Material in die Ankerhülse 11 eindringen und deren Funktion beeinträchtigen kann, wird diese dicht abgeschlossen. Durch die Verbindungsschraube 12 wird die Ankerhülse 11 oben dicht abgeschlossen. Auf der Unterseite wird die Ankerhülse 11 mittels eines Dichtungselements 7, z.B. mittels einer Schraube oder eines Kunststoffpfropfens verschlossen, welches nach dem Entfernen der Verschalung 51 mit einem Handgriff entfernt werden kann.

Die in Figur 1 rechts gezeigte Ankervorrichtung 1 zeigt ferner den Zustand nach Abschluss des Giessvorgangs. Die Verschalungsplatte 51 und das Dichtungselement 7 wurden bereits entfernt, so dass bereits eine Montageschraube 8 in die Ankerhülse 11 eingesetzt werden konnte. Der Hülsenfuss 111 schliesst bündig an die freigelegte Oberfläche der Betondecke 9 an.

Nach der Aushärtung der Gussmasse sind die Verbindungsschraube 12 und der Verbindungsanker 2 ebenfalls in der Betonmasse eingegossen. Im Vergleich zu konventionellen Spreizankern sind erfindungsgemässe Ankerhülsen 11 daher nicht nur kraftschlüssig, sondern formschlüssig in der Betondecke 9 gehalten und faktisch darin integriert. Die Ankerhülsen 11 sind daher soweit belastbar, wie es die Tragfähigkeit der Betondecke 9 erlaubt.

Aus Figur 1 ist ferner der Vorgang zur Fertigung der Betondecke 9 und zur Installation der Ankervorrichtung 1 ersichtlich. Zuerst wird die Verschalungsplatte 51 installiert und abgestützt. In der Folge werden die unteren Elemente 31 der Bewehrung 3 installiert, die mittels ersten Abstandshaltern (nicht gezeigt) um das vorgesehene Verlegemass von der Verschalungsplatte 51 beabstandet werden. In der Folge werden die oberen Elemente 32 der Bewehrung 32 installiert, die z.B. anhand von zweiten Abstandshaltern (nicht gezeigt) beabstandet von den unteren Bewehrungselementen 31 gehalten werden. In der Folge werden die Ankervorrichtungen 1 derart eingesetzt, dass die Ankerhülsen 11 an der Bewehrung 3 vorbei geführt und mit dem Hülsenfuss 111 auf der Verschalungsplatte 51 abgestützt werden.

Vorzugsweise ist der Hülsenfuss 111 mit Kopplungselementen 1111 (siehe Figur 3) versehen, mittels denen der Hülsenfuss 111 kraftschlüssig oder formschlüssig mit der Verschalungsplatte 51 verbindbar ist. Beispielsweise werden Kopplungsspitzen oder Kopplungsringe an der Unterseite des Hülsenfusses 111 vorgesehen, welche um ein Mindestmass in die Verschalungsplatte 51 eindringen können und dort formschlüssig und drehfest gehalten sind. Anschliessend werden die Verbindungsschrauben 12 gedreht, bis die Verbindungsanker 2 an die Bewehrung 2 angekoppelt sind. Durch weiteres Drehen der Verbindungsschrauben 12 werden die Ankervorrichtungen 1 zwischen der Verschalungsplatte 51 und der Bewehrung 3 verspannt. Für diesen Vorgang kann ein motorisierter Schraubendreher eingesetzt werden, der die Verbindungsschrauben 12 dreht bis ein vorgesehenes Drehmoment erreicht ist. Vorzugsweise werden Verbindungsschrauben 12 verwendet, welche einen beispielsweise mit einem Sechskantprofil oder einem Kreuzschlitzprofil versehenen Schraubenkopf 128 aufweisen, welcher mit einem passenden Werkzeug einfach und sicher erfasst werden kann.

Figur 2 zeigt einen Schnitt durch eine gegossene Betondecke 9, die mit einer weiteren erfindungsgemässen Ankervorrichtung 1 ausgerüstet ist. Diese Ankervorrichtung 1 umfasst ein balkenförmiges Verbindungselement bzw. einen Verbindungsbalken 125, welches durch zwei erste Verbindungsschrauben 12A, 12B mit zwei Ankerhülsen 11A, 11B und über eine dritte Verbindungsschraube 120 mit einem Verbindungsanker 20 verbunden ist. Die Ankerhülsen 11A, 11B entsprechen denjenigen von Figur 1 und weisen ebenfalls je einen Hülsenfuss 111 auf, der auf die Verschalungsplatte 51 abgestützt wird. Der hakenförmige Verbindungsanker 20 wurde von unten gegen das Bewehrungselement 32 geführt und ist in dieses eingehängt. In dieser Ausgestaltung weist der Verbindungsanker 20 ein Gewinde 201 auf, in das die dritte Verbindungsschraube 120 eingedreht ist. Durch Anziehen der dritten Verbindungsschraube 120 wird der Verbindungsanker 20 nach oben gezogen, bis er an der Bewehrung 3 anliegt. Bei weiterem Anziehen der dritten Verbindungsschraube 120 und starr mit der Bewehrung 3 gekoppeltem Verbindungsanker 20 wird nun der Verbindungsbalken 125 nach unten gegen die Ankerhülsen 11A, 11B gedrückt, so dass diese an die Verschalungsplatte 51 angedrückt werden.

Alternativ können auch die ersten beiden Verbindungsschrauben 12A, 12B aus der Ankerhülse 11A bzw. 11B nach oben gedreht werden, wodurch der Verbindungsbalken 125 angehoben und der Verbindungsanker 20 gegen die Bewehrung 3 geführt wird. Sobald der Verbindungsanker 20 an der Bewehrung 3 anliegt, wird der Verbindungsbalken 125 an den äusseren Enden nach oben gebogen und federelastisch gespannt. In dieser Ausgestaltung kann der Verbindungsbalken 125 als elastisches Element dienen, welches sicherstellt, dass die Ankervorrichtung 1 auch dann sicher gehalten bleibt, wenn Dehnungen, Relaxationen oder Schwingungen in der Bewehrung 3 auftreten.

Durch kinematische Umkehr können andere Ausgestaltungen der Ankervorrichtung 1 von Figur 2 erreicht werden. Beispielsweise kann die dritte Verbindungsschraube 120 auch in einem Gewinde gehalten werden, welches im Verbindungsbalken 125 um nicht im Verbindungsanker 20 vorgesehen ist. Der Verbindungsanker 20 kann beispielsweise durch eine Schraubenmutter gehalten werden, die am unteren Ende der dritten Verbindungsschraube 120 arretiert ist. Der Verbindungsbalken 125 kann ferner auch auf andere Weise mit den Ankerhülsen 11A, 11B oder dem Verbindungsanker 2 verbunden werden. Sofern die Ankerhülsen 11A, 11B mit einem Aussengewinde versehen sind, können sie direkt mit dem Verbindungsbalken 125 verbunden werden. Die ersten beiden Verbindungsschrauben 12A, 12B werden in diesem Fall nicht benötigt. Die Fixierung der Ankervorrichtung 1 erfolgt dabei allein durch die dritte Verbindungsschraube 120. umgekehrt kann der Verbindungsbalken 125 fest mit dem Verbindungsanker 20 verbunden sein und durch die in den Ankerhülsen 11A, 11B vorgesehenen Verbindungsschrauben 12A, 12B angehoben werden.

Figur 3 zeigt zwei vorzugsweise ausgestaltete Ankervorrichtungen 1 während der Installation. Diese Ankervorrichtungen 1 weisen Verbindungsschrauben 12 auf, deren Schaft 129 mit einem tellerförmigen oder kragenförmigen Stützelement 121, verbunden ist. Beispielsweise wird das Stützelement 121 durch die in Figur 1b gezeigte Kreisplatte 1211 gebildet, die eine Kreisöffnung aufweist, in die der Schaft 129 der Verbindungsschraube 12 eingesetzt ist. Die Kreisplatte ist beispielsweise mit dem Schraubenschaft 129 verschweisst. Andere Ausgestaltungen von Verbindungsschrauben mit einem Stützelement 121 sind in den Figuren 1a und 1b gezeigt.

Auf das Stützelement 121 kann der Ankerkopf 22 des Verbindungsankers 2 aufgesetzt werden. Der Ankerkopf 22 ist kragenförmig ausgestaltet und kann den Schraubenschaft 129 aufnehmen. Damit sich der Ankerkopf 22 nicht mehr selbsttätig lösen kann, können zum Beispiel die Kragenspitzen nach oben gebogen sein, so dass sie am Schraubenkopf 128 anstossen.

Der Verbindungsanker 2 weist einen symmetrischen Ankerfuss 21 mit zwei voneinander abgewandten Ankerelementen 211 auf. Jedes der Ankerelemente 211 kann mit einem Bewehrungselement 32 gekoppelt werden, wie dies die zweite Ankervorrichtung 1 von Figur 3 zeigt, bei der die Verbindungsschraube 12 mit dem installierten Verbindungsanker 2 nach oben gedreht wurde.

In vorzugsweisen Ausgestaltungen werden Ankervorrichtungen 1 eingesetzt, die wenigstens ein elastisches Vorrichtungsteil, beispielsweise einen elastischen Verbindungsanker 2 oder einen elastischen Verbindungsbalken 125, oder ein zusätzliches elastisches Element, wie eine Spiralfeder, aufweisen. Derartige elastische Ankervorrichtungen 1 können gespannt werden, so dass sie federelastisch gehalten sind. Dehnungen, Relaxationen und Schwingungen der Bewehrung 3 können durch das elastische Element aufgefangen und kompensiert werden.

In den Figuren 4a, 4b und 4c ist eine Ankervorrichtung 1 mit einem elastischen Element 25 in der Form einer Spiralfeder gezeigt (die Ankerhülse 11 entspricht beispielsweise derjenigen von Figur 3 und ist nicht gezeigt). Die Verbindungsschraube 12 entspricht derjenigen von Figur 3, wobei das Stützelement 121 weiter vom Schraubenkopf 128 entfernt ist, so dass zwischen dem Stützelement 121 und dem Schraubenkopf die Spiralfeder 25 und der Ankerkopf 22 des Verbindungsankers 2 installiert werden können.

Der Verbindungsanker 2 weist einen Ankerfuss 21 mit nur einem Ankerelement auf, welches zungenförmig ausgestaltet ist. Der zungenförmige Ankerfuss 21 kann eine Blattfeder bilden und ebenfalls zur Elastizität der Ankervorrichtung 1 von Figur 4 beitragen. Der Verbindungsanker 2 von Figur 4 kann auch mit den Verbindungsschrauben 12 der Figuren 1, 1a, 1b und 3 vorteilhaft kombiniert werden. Sofern Teile der Ankervorrichtung 1 eine bestimmte Elastizität aufweisen sollen, so werden sie aus einem geeigneten Material, vorzugsweise Federstahl, gefertigt. Möglich ist auch die Verwendung von Kunststoffteilen.

Der Durchmesser der Spiralfeder 25 ist derart gewählt, dass der Schraubenkopf 128 durch die Spiralfeder 25 hindurch geführt und die Spiralfeder 25 auf dem Stützelement 121 abgesetzt werden kann. In der Folge wird der Ankerkopf 22 zwischen der Spiralfeder 25 und dem Schraubenkopf 128 eingefügt. Der Ankerkopf 22, der einen Sitz oder eine Einformung 220 zur Aufnahme des Schraubenkopfs 128 aufweist, wird sodann von der Spiralfeder 25 gegen den Schraubenkopf 128 gedrückt, wie dies in Figur 4b gezeigt ist. Nebst der resultierenden Elastizität der Ankervorrichtung 1 ergibt sich dadurch der Vorteil, dass der Verbindungsanker 2 fest gehalten ist und sich auch bei Manipulationen nicht selbsttätig von der Verbindungsschraube 12 lösen kann. Die Ankervorrichtung 1 kann daher bequem gehandhabt und auf die Verschalungsplatte 51 aufgesetzt werden, ohne dass sich Vorrichtungsteile lösen können.

In Figur 4c ist gezeigt, dass die Verbindungsschraube 12 nach oben gedreht wurde, so dass der Verbindungsanker 2 bis zur Bewehrung 3, 32 angehoben und die Spiralfeder 25 weiter gespannt wurde. Der Ankerkopf 22 liegt etwa in der Mitte zwischen dem Schraubenkopf 128 und dem Stützelement 121 und kann beim Auftreten von Schwingungen auf beide Seiten ausgelenkt werden. Das Drehmoment, mit dem die Verbindungsschraube 12 angezogen wird, wird daher vorzugsweise derart gewählt, dass die Spiralfeder 25 etwa um ein Drittel oder um die Hälfte komprimiert wird. Auf diese Weise kann der Ankerkopf 22 auf beide Seiten mit etwa derselben Amplitude schwingen.

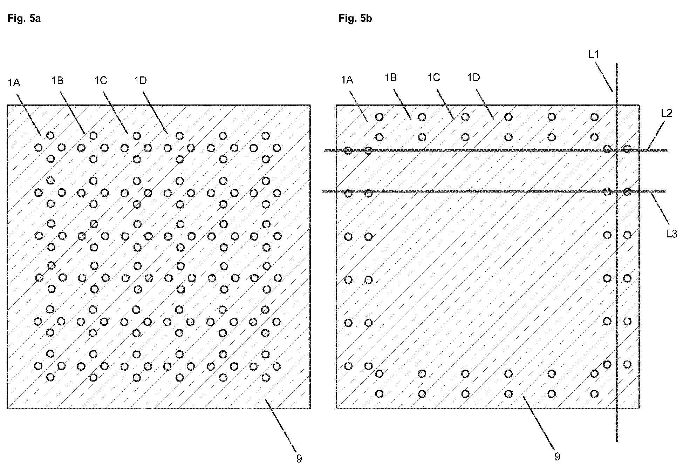

Figur 5a zeigt eine fertiggestellte erfindungsgemässe Betondecke 9, die mit 36 gleichmässig verteilten Ankervorrichtungen 1A, 1B, 1C, ... ausgerüstet ist, die je vier Ankerhülsen 11 aufweisen, die beispielsweise von zwei miteinander gekreuzten Verbindungsbalken 125 gehalten werden. Die kostengünstigen Ankervorrichtungen können mit geringem Aufwand gesetzt werden, wonach bei der fertig gestellten Betondecke 9 eine hohe Anzahl von Befestigungspunkten resultiert, ohne dass die Betondecke 9 geschwächt ist. Jede der eingesetzten Ankervorrichtungen 1A, 1B, 1C, ... erlaubt es zudem, Lasten zu tragen, welche im Wesentlichen von der Tragfähigkeit der Betondecke 9 selbst abhängt. Diese Anordnung der Ankervorrichtungen 1A, 1B, 1C, ... wird z.B. vorgesehen, wenn der Raum vielfältig genutzt und die Innenarchitektur später möglicherweise geändert werden soll. Erfindungsgemässe Betondecken 9 können daher insbesondere in modernen Labors und Werkstätten, vorteilhaft eingesetzt werden. Sofern die Laboreinrichtung oder die Werkstatteinrichtung zu einem späteren Zeitpunkt ergänzt oder geändert wird, so stehen bereits alle notwendigen Befestigungspunkte an der Betondecke zur Verfügung.

Figur 5b zeigt eine erfindungsgemässe Betondecke 9, die mit 24 Ankervorrichtungen 1A, 1B, 1C, ... gemäss Figur 2 ausgerüstet ist, die gleichmässig entlang dem Rand der Betondecke 9 verteilt sind. Diese Anordnung der Ankervorrichtungen 1A, 1B, 1C, ... wird vorzugsweise vorgesehen, wenn Kabelführungsvorrichtungen entlang der Betondecke 9 verlegt werden sollen. Die Montagevorrichtungen, wie Deckenstützen, können in diesem Fall rasch und bequem installiert werden.

In Figur 5b sind ferner Hilfslinien L1, L2 und L3 eingezeichnet, die Positionen bezeichnen, an denen die Ankervorrichtungen 1 installiert werden. Auf der Baustelle können diese Hilfslinien L1, L2 und L3 mittels Laserstrahlen angezeigt werden. Vorzugsweise wird die Laservorrichtung mit Bezug auf wenigstens einen Referenzpunkt ausgerichtet. Die Betondecke 9 kann daher nach Wunsch mit Ankervorrichtungen 1 versehen werden. Die Ankervorrichtungen 1 werden vorzugsweise in die Baupläne oder andere Datenträger eingezeichnet, so dass der Bauherr deren Position jeweils bei Bedarf nachschlagen kann.

### Literaturverzeichnis

[1] Produktkatalog der LANZ OENSINGEN AG, Juni 2009
[2] EP1903220
[3] Pickhardt, Roland / Bose, Thomas / Schäfer, Wolfgang: Beton - Herstellung nach Norm, Arbeitshilfe für Ausbildung, Planung und Baupraxis, 19. überarbeitete Auflage 2012, Herausgeber: Beton Marketing Deutschland GmbH, Erkrath
[4] Alfons Goris, Stahlbetonbau-Praxis nach DIN 1045 neu, 3. Auflage 2008
[5] Frank Fingerloos, Abstandhalter nach DIN 1045 und DBV-Merkblatt, Auszug: Beton-und Stahlbetonbau, Heft 6/2006
[6] EP2199476A2

## Patentansprüche

1. Betondecke (4) mit einer Bewehrung (3) und mit wenigstens einer darin verankerten Ankervorrichtung (1), die wenigstens eine Ankerhülse (11) umfasst, die ein Innengewinde aufweist, das der Aufnahme einer Montageschraube (8) dient, wobei die Ankerhülse (11) einen auf eine Verschalungsplatte (51) abstützbaren Hülsenfuss (111) aufweist und dass die Ankerhülse (11) mit einem mit der Bewehrung (3) koppelbaren bzw. gekoppelten Verbindungsanker (2,20) verbunden ist, **dadurch gekennzeichnet, dass** der Verbindungsanker (2,20) mit wenigstens einer Verbindungsschraube (12; 120) verbunden und vor der Installation in der Betondecke (4) vertikal verschiebbar gehalten ist, wobei die Verbindungsschraube (12; 120) im Innengewinde der Ankerhülse (11) oder von einem Verbindungselement (125) gehalten ist, welches mit wenigstens zwei auf die Verschalungsplatte (51) abstützbaren Ankerhülsen (11A, 11B) verbunden ist.

2. Betondecke (4) nach Anspruch 1, **dadurch gekennzeichnet, dass** die wenigstens eine Ankerhülse (11; 11A, 11B) zwischen der Verschalungsplatte (51) und der Bewehrung (3) vorzugsweise federelastisch eingespannt bzw. vor der Installation einspannbar ist.

3. Betondecke (4) nach Anspruch 1 oder 2, **dadurch gekennzeichnet, dass** der vorzugsweise symmetrische Hülsenfuss (111) tellerförmig ausgestaltet und mit einer Öffnung versehen ist, durch die die Montageschraube (8) in die Ankerhülse (11) einsetzbar ist und/oder dass der Hülsenfuss (111) mit Fixierelementen (1111), wie Kopplungsspitzen oder Kopplungsringen, versehen ist, mittels denen der Hülsenfuss (111) formschlüssig oder kraftschlüssig mit der Verschalungsplatte (51) verbindbar ist.

4. Betondecke (4) nach Anspruch 1, 2 oder 3, **dadurch gekennzeichnet, dass** die Ankerhülse (11) auf der Unterseite ein Innengewinde für die Montageschraube (8) und auf der Oberseite ein Innengewinde für die Verbindungsschraube (12) aufweist, oder dass die Ankerhülse (11) nur ein Innengewinde aufweist, welches die Ankerhülse (11) praktisch vollständig durchläuft und zur Aufnahme einerseits der Verbindungsschraube (12) und andererseits zur Aufnahme der Montageschraube (8) vorgesehen ist.

5. Betondecke (4) nach einem der Ansprüche 1 - 4, **dadurch gekennzeichnet, dass** die Verbindungsschraube (12) drehbar mit dem Verbindungsanker (2) verbunden ist und/oder dass der Schaft (129) der Verbindungsschraube (12) ein dem Halten des Verbindungsankers (2) dienendes Stützelement (121) aufweist.

6. Betondecke (4) nach Anspruch 5, **dadurch gekennzeichnet, dass** das Stützelement (121) durch eine stufenweise Verjüngung des Schraubenschafts (129), durch wenigstens eine auf dem Schraubenschaft (129) arretierte, gegebenenfalls gegen eine Abstufung des Schraubenschafts (129) gedrehte Schraubenmutter oder durch ein mit dem Schraubenschaft verbundenes tellerförmiges Element, wie eine Unterlagscheibe realisiert wird, welche gegebenenfalls durch eine Schraubenmutter gegen eine Abstufung des Schraubenschafts (129) gedrückt wird.

7. Betondecke (4) nach einem der Ansprüche 1 - 6, **dadurch gekennzeichnet, dass** der Verbindungsanker (2) einen mit dem Schaft (129) der Verbindungsschraube (12) verbunden oder daran angepassten Ankerkopf (22) und einen an die Bewehrung (3) ankoppelbaren Ankerfuss (21) aufweist, der symmetrisch oder asymmetrisch und vorzugsweise hakenförmig ausgestaltet ist.

8. Betondecke (4) nach einem der Ansprüche 1 - 7, **dadurch gekennzeichnet, dass** der Verbindungsanker (2) auf ein elastisches Element (25), wie eine Spiralfeder, abgestützt ist, welches seinerseits auf der Verbindungsschraube (12), vorzugsweise auf dem Stützelement (121) ruht.

9. Betondecke (4) nach Anspruch 8, **dadurch gekennzeichnet, dass** die Verbindungsschraube (12) einen Schraubenkopf (128) aufweist, dessen Durchmesser geringer ist als der Durchmesser der Spiralfeder (25) und dass der Durchmesser des Ankerkopfs (22), welcher den Schaft (129) der Verbindungsschraube (12) zumindest teilweise umschliesst, grösser ist als der Durchmesser der Spiralfeder (25), welche den Verbindungsanker (2) vor der Installation gegen den Schraubenkopf (128) und nach der Installation gegen die Bewehrung (3) drückt.

10. Betondecke (4) nach einem der Ansprüche 1 - 9, **dadurch gekennzeichnet, dass** der Verbindungsanker (2), vorzugsweise der Ankerfuss (21), elastisch ausgestaltet ist und/oder, dass der Ankerkopf (22) einen Sitz (220) aufweist, welcher der Aufnahme des Kopfes (128) der Verbindungsschraube (12) dient.

11. Betondecke (4) nach einem der Ansprüche 1 - 9, **dadurch gekennzeichnet, dass** die mit dem Verbindungsanker (20) verbundene, gegebenenfalls in einem Gewinde (201) des Verbindungsankers (2) gehaltene Verbindungsschraube (120) vorzugsweise in dessen Mitte vom balkenförmigen Verbindungselement (125) gehalten ist, welches auf beiden Seiten mit einer Ankerhülse (11A, 11B) verbunden und vorzugsweise elastisch ausgestaltet ist.

12. Verfahren zur Fertigung einer Betondecke (9) mit einer Ankervorrichtung (1) nach einem der Ansprüche 1 - 11, **dadurch gekennzeichnet, dass** die Verschalung (51) für die Betondecke (9) erstellt wird, die eine Verschalungsplatte (51) umfasst, welche die Unterseite der Betondecke (9) begrenzt und nach dem Eingiessen und Aushärten des Betons (4) entfernt wird und dass die einlagige oder mehrlagige Bewehrung (3; 31, 32) installiert wird, wonach die wenigstens eine Ankerhülse (11; 11A; 11B) mit dem Hülsenfuss (111) auf die Verschalungsplatte (51) aufgesetzt und die Verbindungsschraube (12; 120) gegebenenfalls mit einem motorisierten Schraubendreher gedreht wird, bis der Verbindungsanker (2) an die Bewehrung (3) angekoppelt ist.

13. Verfahren nach Anspruch 11, **dadurch gekennzeichnet, dass** die Positionen, an denen die Ankervorrichtungen (1) angeordnet werden, vor der Installation optisch angezeigt und auf einem Datenträger registriert werden.

14. Verfahren nach Anspruch 12 oder 13, **dadurch gekennzeichnet, dass** die Ankervorrichtungen (1) derart positioniert werden, dass die Ankerhülsen (11) an festgelegten Positionen angeordnet werden und vorzugsweise in einem gleichmässigen Raster über die Betondecke (9) verteilt sind oder in einem gleichmässigen Raster entlang dem Rand der Betondecke (9) verlaufen.

## Claims

1. Concrete ceiling (4) with a reinforcement (3) and with at least one anchoring device (1) anchored therein, that comprises at least one anchor sleeve (11), which is provided with an inner threading that serves for receiving a mounting screw (8), wherein the anchor sleeve (11) comprises a sleeve foot (111) that can be seated on a shuttering plate (51) and that the anchor sleeve (11) is connected with a connecting anchor (2,20), which is coupleable or coupled, respectively, with the reinforcement (3), **characterised in that** the connecting anchor (2,20) is connected with at least one connecting screw (12; 120) and before the installation is vertically shiftable held within the concrete ceiling (4), wherein the connecting screw (12; 120) is held in the inner threading of the anchor sleeve (11) or is held in a connecting element (125), which is connected with at least two anchoring sleeves (11A, 11B) that can be seated on the shuttering plate (51).

2. Concrete ceiling (4) according to claim 1, **characterised in that** the at least one anchor sleeve (11; 11A, 11B) is preferably mounted spring-elastically or mountable spring-elastically before the installation between the shuttering plate (51) and the reinforcement (3).

3. Concrete ceiling (4) according to claim 1 or 2, **characterised in that** the preferably symmetrical sleeve foot (111) is dish-shaped and is provided with an opening, through which the mounting screw (8) is insertable into the anchor sleeve (11) and/or that the sleeve foot (111) is provided with fixing elements (1111), such as coupling peaks or coupling rings, with which the sleeve foot (111) is connectable in a form-looking manner or a force-looking manner with the shuttering plate (51).

4. Concrete ceiling (4) according to claim 1, 2 or 3, **characterised in that** the anchor sleeve (11) comprises an inner threading on the lower side for the mounting screw (8) and an inner threading on the upper side for the connecting screw (12), or that the anchor sleeve (11) comprises only one inner threading, which traverses the anchor sleeve (11) practically completely and serves for receiving on the one side the connecting screw (12) and for receiving on the other side the mounting screw (8).

5. Concrete ceiling (4) according to one of the claims 1 - 4, **characterised in that** the connecting screw (12) rotatably connected with the connecting anchor (2) and/or that the shaft (129) of the connecting screw (12) comprises a supporting element (121), which serves for holding the connecting anchor (2).

6. Concrete ceiling (4) according to claim 5, **characterised in that** the supporting element (121) by a stepped tapering of the screw shaft (129), by at least one screw nut fixed on the screw shaft (129), optionally turned against a gradation of the screw shafts (129), or is carried out by a dish-shaped element connected to the screw shaft, such as a washer, which optionally is pressed by a screw nut against a gradation of the screw shaft (129).

7. Concrete ceiling (4) according to one of the claims 1 - 6, **characterised in that** the connecting anchor (2) comprises an anchor head (22), which is connected or adapted to the shaft (129) of the connecting screw (12), and an anchor foot (21) that is coupleable with the reinforcement (3), and that is designed symmetrically or asymmetrically and preferably hook-shaped.

8. Concrete ceiling (4) according to one of the claims 1 - 7, **characterised in that** the connecting anchor (2) is seated on an elastic element (25), such as a spiral spring, which itself is seated on the connecting screw (12), preferably on the supporting element (121).

9. Concrete ceiling (4) according to claim 8, **characterised in that** the connecting screw (12) comprises a screw head (128), whose diameter is smaller than the diameter of the spiral spring (25) and that the diameter of the anchor head (22), which at least partially encompasses the shaft (129) of the connecting screw (12), is larger than the diameter of the spiral spring (25), which presses the connecting anchor (2) before the installation against the screw head (128) and after the installation against the reinforcement (3).

10. Concrete ceiling (4) according to one of the claims 1 - 9, **characterised in that** the connecting anchor (2), preferably the anchor foot (21), is designed elastically and/or, that the anchor head (22) comprises a seat (220), which serves for receiving the head (128) of the connecting screw (12).

11. Concrete ceiling (4) according to one of the claims 1 - 9, **characterised in that** the connecting screw (120), which is connected to the connecting anchor (20), optionally held in a threading (201) of the connecting anchor (2), is preferably held in its centre by a beam-shaped connecting element (125), which is connected on both sides with an anchor sleeve (11A, 11B) and is preferably designed elastically.

12. Method for creating a concrete ceiling (9) with an anchoring device (1) according to one of the claims 1 - 11, **characterised in that** the shuttering (51) is established for the concrete ceiling (9), which comprises a shuttering plate (51) that delimits the lower side of the concrete ceiling (9) and is removed after infusing and curing of the concrete (4) and that the single-layered or multi-layered reinforcement (3; 31, 32) is installed, whereafter the at least one anchor sleeve (11; 11A; 11B) is seated with the sleeve foot (111) on the shuttering plate (51) and the connecting screw (12; 120) is turned, optionally with a motorised screw driver, until the connecting anchor (2) is coupled to the reinforcement (3).

13. Method according to claim 11, **characterised in that** the positions, at which anchoring devices (1) are arranged, are optically indicated before installation and registered on a data carrier.

14. Method according to claim 12 or 13, **characterised in that** the anchoring devices (1) are positioned such, that the anchoring sleeves (11) are arranged on predetermined positions and are preferably distributed in an even pattern across the concrete ceiling (9) or extend in an even pattern along the edge of the concrete ceiling (9).

## Revendications

1. Dalle en béton (4) avec une armure (3) et avec au moins un dispositif d'ancrage (1) ancré là-dedans, qui présente au moins une douille d'ancrage (11), qui présente un taraudage, qui sert à loger une vis de montage (8), ladite douille d'ancrage (11) présentant un pied de la douille (111) qui peut s'appuyer sur une plaque de coffrage (51) et que la douille d'ancrage (11) est connectée à un induit de connexion (2, 20) qui peut être couplé à resp. qui est couplé à l'armure (3), **caractérisé en ce que** l'induit de connexion (2,20) est connecté à au moins une vis de connexion (12; 120) et tenu de manière à pouvoir être bougé verticalement avant l'installation dans la dalle en béton (4), ladite vis de connexion (12, 120) étant tenue dans le taraudage de la douille d'ancrage (11) ou par un élément de connexion (125), qui est connecté à au moins deux douilles d'ancrage (11A, 11B) qui peuvent s'appuyer sur la plaque de coffrage (51).

2. Dalle en béton (4) selon la revendication 1, **caractérisé en ce que** la au moins une douille d'ancrage (11; 11A, 11B) est tendue de manière élastique à ressort tendu entre la plaque de coffrage (51) et l'armure (3) resp. peut être tendue entre lesdites pièces avant l'installation.

3. Dalle en béton (4) selon la revendication 1 ou 2, **caractérisé en ce que** le pied de douille (111) qui est de préférence symétrique est conçu en forme d'assiette et muni d'une ouverture à travers laquelle la vis de montage (8) peut être introduite dans la douille d'ancrage (11) et/ou que le pied de douille (111) présente des éléments de fixation (1111) comme des pointes d'accouplement ou des anneaux d'accouplement, par lesquels le pied de douille (111) peut être relié à la plaque de coffrage (51) par ajustement de forme ou de manière à être solidaire.

4. Dalle en béton (4) selon la revendication 1, 2 ou 3, **caractérisé en ce que** la douille d'ancrage (11) présente sur la face inférieure un taraudage pour la vis de montage (8) et sur la face supérieure un taraudage pour la vis de connexion (12), ou que la douille d'ancrage (11) ne présente qu'un taraudage qui traverse la douille d'ancrage (11) pratiquement complètement et qui est prévue à recevoir d'un côté la vis de connexion (12) et de l'autre côté la vis de montage (8).

5. Dalle en béton (4) selon une des revendications 1 - 4, **caractérisé en ce que** la vis de connexion (12) est connecté de manière à pouvoir tourner à l'induit de connexion (2) et/ou que la tige (129) de la vis de connexion (12) présente un élément de support (121) qui sert à tenir l'induit de connexion (2).

6. Dalle en béton (4) selon la revendication 5, **caractérisé en ce que** l'élément de support (121) est réalisé par un amincissement par paliers de la tige de vis (129), par au moins un écrou fixé sur la tige de vis (129) éventuellement visé contre un palier de la tige de vis (129) ou par un élément en forme d'assiette, comme une rondelle, relié à la tige de vis (129), qui est éventuellement pressée par l'écrou contre un palier de la tige de vis (129).

7. Dalle en béton (4) selon une des revendications 1 - 6, **caractérisé en ce que** l'induit de connexion (2) présente une tête d'induit (22) adapté à et connecté à la tige (129) de la vis de connexion (12) et un pied d'induit (21), conçu de manière symétrique ou asymétrique et de préférence en forme de crochet, qui peut être couplé à l'armure (3).

8. Dalle en béton (4) selon une des revendications 1 - 7, **caractérisé en ce que** l'induit de connexion (2) est appuyé sur un élément élastique (25), comme un ressort, qui est posé sur la vis de connexion (12), de préférence sur l'élément de support (121).

9. Dalle en béton (4) selon la revendication 8, **caractérisé en ce que** la vis de connexion (12) présente une tête de vis (128), dont le diamètre est inférieur au diamètre du ressort (25) et que le diamètre de la tête d'induit (22), qui encercle au moins partiellement la tige (129) de la vis de connexion (12), est plus grand que le diamètre du ressort (25), qui appuie l'induit d'ancrage (2) avant l'installation contre la tête de vis (128) et après l'installation contre l'armure (3).

10. Dalle en béton (4) selon une des revendications 1 - 9, **caractérisé en ce que** l'induit de connexion (2), de préférence le pied de l'induit (21), est conçu de manière élastique et/ou que la tête de l'induit (22) présente un palier (220), qui sert à loger la tête (128) de la vis de connexion (12).

11. Dalle en béton (4) selon une des revendications 1 - 9, **caractérisé en ce que** la vis de connexion (120) qui est connecté à l'induit d`ancrage (20), éventuellement logé dans un taraudage (201) de l'induit d'ancrage (2), de préférence tenue au milieu de l'élément de connexion (125) en forme de poutre, qui est relié des deux côtés à une douille d'ancrage (11A, 11B) et de préférence conçu de manière élastique.

12. Procédé pour former une dalle en béton (9) avec un dispositif d'ancrage (1) selon une des revendications 1 - 11, **caractérisé en ce que** le coffrage (51) pour la dalle en béton (9) est fabriqué, comprenant une plaque de coffrage (51), qui limite la face inférieure de la dalle en béton (9) et qui est enlevé après le versement et durcissement du béton (4) et que l'armure (3; 31, 32) à une couche ou à plusieurs couches est installée, après quoi la au moins une douille d'ancrage (11; 11A; 11B) avec le pieds de douille (111) est posé sur la plaque de coffrage (51) et la vis de connexion (12; 120) est tourné éventuellement avec un tournevis motorisé jusqu'à ce que l'induit d'ancrage (2) est couplé à l'armure (3).

13. Procédé selon la revendication 11, **caractérisé en ce que** les positions à lesquelles les dispositifs d'ancrage (1) sont placés, sont indicé de manière optique avant l'installation et sont sauvegardé sur un support de données.

14. Procédé selon la revendication 12 ou 13, **caractérisé en ce que** les dispositifs d'ancrage (1) sont placés de manière à ce que les douilles d'ancrage (11) sont arrangées à des positions définies et sont de préférence distribuées selon une trame uniforme à travers la dalle en béton (4) ou sont orientées le long d'une trame uniforme le long du bord de la dalle en béton (4).
